# EUROPEAN PATENT SPECIFICATION

(11) **EP 4 342 697 B1**
(45) Date of publication and mention of the grant of the patent: **01.07.2026**
(21) Application number: 23198489.9
(22) Date of filing: 20.09.2023
(51) Int. Cl.: B60H 1/00, B60H 1/24

(54) **CAR AIR CONDITIONING SYSTEM**
KLIMAANLAGE FÜR EIN FAHRZEUG
SYSTÈME DE CLIMATISATION POUR UNE VOITURE

(30) Priority: 21.09.2022 IT 202200019347
(43) Date of publication of application: 27.03.2024
(73) Proprietor: FERRARI S.p.A., 41100 Modena (IT)
(72) Inventor: VATA, Klajdi, 41100 MODENA (IT)
(74) Representative: Studio Torta S.p.A.

(56) References cited:
- DE-A1- 102020 119 404
- FR-A1- 2 844 483
- JP-A- 2019 167 008
- US-A- 5 902 181
- US-A1- 2020 148 030

## Description

### TECHNICAL FIELD

The present invention relates to a car air conditioning system.

In particular, the present invention relates to a car air conditioning system of the type comprising a pneumatic circuit for feeding an air flow into a passenger compartment of a vehicle; and a cooling circuit for refrigerating the air flow fed along the pneumatic circuit.

### BACKGROUND

Generally, the pneumatic circuit comprises a fan for generating the air flow; a manifold for feeding the air flow from the fan to the cooling circuit; and two feeding branches connected to the manifold and mounted in parallel to one another for feeding the refrigerated air flow, one into the right area of the vehicle, in particular into the area of the right rear seat, and the other one into the left area of the vehicle, in particular into the area of the left rear seat.

Each feeding branch comprises a first pneumatic duct connected to the manifold, a second pneumatic duct having a free end communicating with the passenger compartment of the vehicle, and a three-way joint interposed between the two pneumatic ducts.

The three-way joint has an inlet connected to the first pneumatic duct, a first outlet connected to the second pneumatic duct, and a second outlet communicating with the passenger compartment of the vehicle.

The three-way joint further comprises a shutter mounted so as to shift between a first opening position, in which the inlet is connected both to the first outlet and to the second outlet, a second opening position, in which the inlet is connected to the first outlet and is separate from the second outlet, and a third opening position, in which the inlet is connected to the second outlet and is separate from the first outlet.

The known car air conditioning systems of the type described above have some drawbacks mainly deriving from the fact that the three-way joint has a relatively reduced versatility and flexibility, is uncapable of selectively controlling the refrigerated air flow rate fed to the two outlets, and entails the deactivation of the fan for simultaneously locking the feeding of refrigerated air to the two outlets.

Document DE-102020119404-A1 relates to an air distribution plenum for controlling air flow in a vehicle HVAC system. The plenum comprises an air inlet, first and second air outlets, and a movable member, which substantially blocks the first and second air outlets when in a first position, blocks only the first air outlet in a second position, blocks only the second air outlet in a third position, and permits air to flow through both the first and second air outlets when in a fourth position.

Document FR-2844483-A1 relates to a vehicle air conditioning system securing an appropriate temperature difference in the air blown through vertically arranged air ducts when the system is in a bi-level mode. A hot air inlet is disposed above a cool air inlet. A face opening is disposed at an upper location while foot openings are disposed at a lower location. A blow mode-changing door for opening and closing both the openings is a butterfly type door. The blow mode-changing door is pivotally disposed in a door housing. In the bi-level mode in which the blow mode-changing door opens both the foot openings and the face opening, a bi-level mode bypass passageway for introducing cool air from the cool air inlet into the face opening is defined between an extremity of the blow mode-changing door and the inner wall surface of the door-housing portion.

Document US-5902181-A relates to an air flow diverter valve assembly comprising a housing provided with an air inlet opening and at least a pair of air outlet openings one of which is located in the upper wall of the housing and in which a diverter valve is rotatably supported in the housing for movement between positions which allow the air to flow through one or the other of the air outlet openings. The diverter valve includes a pair of laterally spaced end walls each of which has the general shape of a triangle and has first and second angularly spaced and intersecting edges interconnected by a peripheral edge. A first shutter member is connected to and extends transversely between the first edges of the pair of end walls and a second shutter member is connected to and extends transversely between the peripheral edge of each of the pair of end walls beginning at the first edge of each of the end walls and terminating intermediate the first and second edges of each of the pair of end walls so as to define an opening between the first shutter member and the second shutter member.

Document US-2020148030-A1 relates to a zone assembly for a vehicle comprising a housing and a generally cylindrical mode door. The housing includes a cavity, an inlet channel, a first vent channel, and a second vent channel. Each of the channels is fluidly coupled to the cavity. The mode door includes a plurality of louvers and a plurality of extension pieces extending therefrom. The mode door is located in the cavity. The mode door is rotatable between an open position in which fluid may flow from the inlet channel through the mode door to one of the first vent channel or the second vent channel, and a closed position in which the mode door restricts fluid from flowing from the inlet to both the first vent channel and the second vent channel.

Document JP-2019167008-A relates to an air conditioner for a vehicle comprising a rear seat side blast unit for blowing air to a rear seat side of a vehicle. The rear seat side blast unit has a rear seat passage connected to an air-conditioning case, and a rear seat foot passage and a rear seat face passage which are branched at a downstream side of the rear seat passage by a branch part. A changeover mechanism for switching opening/closing states of the rear seat passage, the rear seat foot passage and the rear seat face passage is arranged at the branch part. Then, when blowing air to a rear seat side at a bi-level mode, a lower part of the rear seat passage facing a cold wind passage is blocked by a rotary door of the changeover mechanism, and a cold wind and a hot wind from a cold wind passage are thereby effectively mixed, and can be blown to the rear seat side.

### SUMMARY

The object of the present invention is to provide a car air conditioning system which is exempt from the drawbacks described above and which is simple and cost-effective to manufacture.

According to the present invention, a car air conditioning system is provided as claimed in independent claim 1. Preferred embodiments of the present invention are laid down in the appended dependent claims.

### BRIEF DESCRIPTION OF THE DRAWINGS

The present invention will now be described with reference to the accompanying drawings, which illustrate a non-limiting example embodiment thereof, wherein:
Figure 1 schematically illustrates, with parts removed for clarity, a preferred embodiment of the car air conditioning system of the present invention;
Figure 2 is a plan schematic view, with parts removed for clarity, of a detail of the car air conditioning system of Figure 1; and
Figures 3-6 schematically illustrate the detail of Figure 2 in different operating conditions.

### DESCRIPTION OF EMBODIMENTS

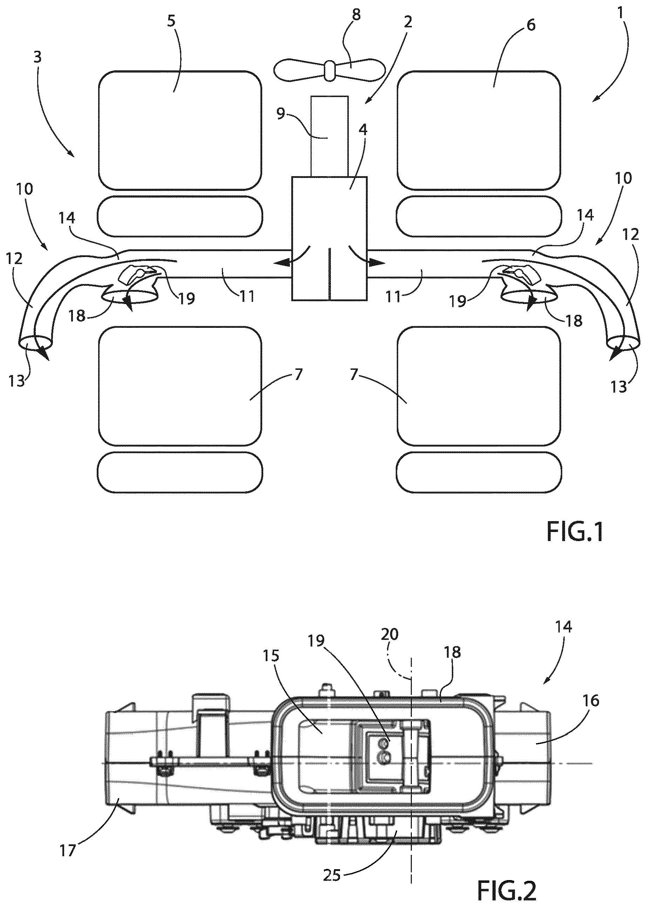

With reference to Figure 1, reference numeral 1 indicates, as a whole, a car air conditioning system comprising a pneumatic circuit 2 for feeding an air flow into a passenger compartment 3 of a vehicle; and a cooling circuit 4 of known type for refrigerating the air flow fed along the pneumatic circuit 2.

The passenger compartment 3 has a left front seat 5 for the driver, a right front seat 6 for a passenger, and two rear seats 7 for further passengers.

The pneumatic circuit 2 comprises a fan 8, a manifold 9 for feeding the air flow generated by the fan 8 to the cooling circuit 4, and two feeding branches 10 connected to the manifold 9 and mounted in parallel to one another for feeding the refrigerated air flow into the area of the two rear seats 7.

Each branch 10 comprises a first pneumatic duct 11 connected to the manifold 9, a second pneumatic duct 12 having a free end 13 communicating with the passenger compartment 3 at the upper area of a relative seat 7, and a three-way joint 14 interposed between the two ducts 11, 12.

The three-way joint 14 comprises a valve body 15 with a cylindrical shape provided with an inlet 16 connected to the duct 11, with a first outlet 17 connected to the duct 12, and with a second outlet 18 communicating with the passenger compartment 3 at the lower area of a relative seat 7.

With regard to what described above, it is suitable to specify that the inlet 16 has a longitudinal axis 16a, which is parallel to, in particular coinciding with, a longitudinal axis 17a of the outlet 17, and is transverse, in particular perpendicular, to a longitudinal axis 18a of the outlet 18.

The three-way joint 14 further comprises a shutter 19 mounted within the valve body 15 for rotating around an axis of rotation coinciding with a longitudinal axis 20 of the valve body 15.

The shutter 19 comprises a rocker arm 21 provided with two arms 22a, 22b, which are arranged at an angle smaller than 180° relative to one another, and are each delimited by a respective end edge 23, which is parallel to the axis 20 and cooperating with an inner surface 24 of the valve body 15.

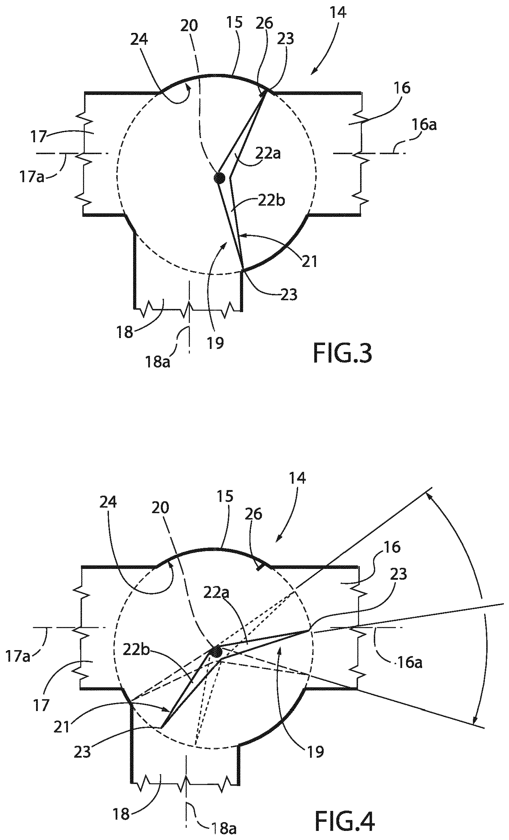

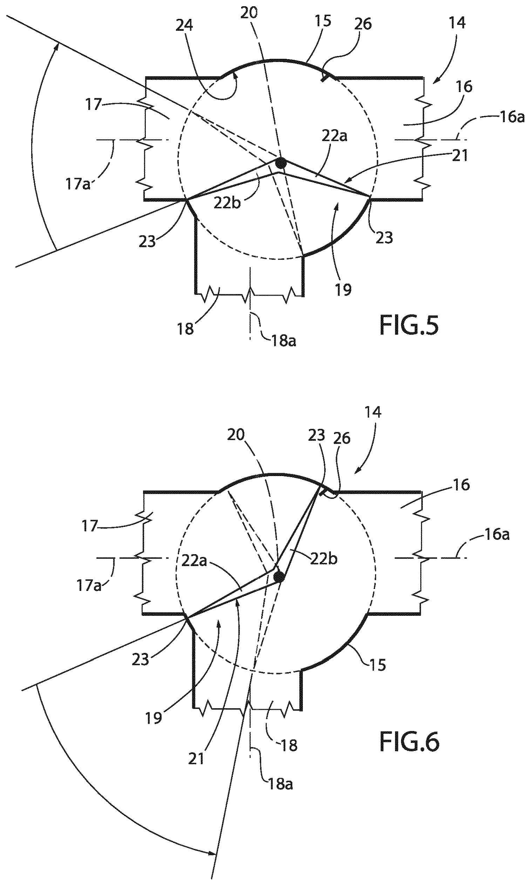

The three-way joint 14 further comprises an actuation device 25 for shifting the shutter 19 around the axis 20 between a closing position (Figure 3), in which the inlet 16 is separate from the two outlets 17, 18, at least one third opening position (Figure 4), in which the inlet 16 is connected both to the outlet 17 and to the outlet 18, a fourth opening position (illustrated by a solid line in Figure 5), in which the inlet 16 is connected to the outlet 17 and is separate from the outlet 18, and a fifth opening position (illustrated by a solid line in Figure 6), in which the inlet 16 is connected to the outlet 18 and is separate from the outlet 17.

The three-way joint 14 is further provided with a limit stop element 26, which protrudes within the valve body 15 from the surface 24 for stopping the shutter 19 in the closing position (Figure 3) and in the fifth opening position (Figure 6).

The inlet 16, the outlets 17, 18, and the shutter 19 are arranged and configured to allow the shutter 19 to shift:
to a plurality of third opening positions (illustrated by a solid line and by a dashed line in Figure 4), in which the shutter 19 selectively controls the refrigerated air flow rate fed to the outlet 17 and to the outlet 18;
to a plurality of first opening positions (one of which is illustrated by a dashed line in Figure 5), in which the arm 22a prevents the refrigerated air flow fed through the inlet 16 from reaching the outlet 18, the arm 22b directs the refrigerated air flow fed through the inlet 16 towards the outlet 17, and the shutter 19 selectively controls the refrigerated air flow rate fed to the outlet 17; and
to a plurality of second opening positions (of which one is illustrated by a dashed line in Figure 6), in which the arm 22b prevents the refrigerated air flow fed through the inlet 16 from reaching the outlet 17, the arm 22a directs the refrigerated air flow fed through the inlet 16 towards the outlet 18, and the shutter 19 selectively controls the refrigerated air flow rate fed to the outlet 18.

The car air conditioning system 1 has some advantages mainly deriving from the fact that the inlet 16, the outlets 17, 18, and the shutter 19 are arranged and configured to allow the three-way joint 14 to selectively control the refrigerated air flow rate fed to the two outlets 17, 18 when the shutter 19 is arranged in one of the opening positions and to prevent the feeding of refrigerated air to the two outlets 17, 18 when the shutter 19 is arranged in the closing position.

## Claims

1. A car air conditioning system (1) comprising a pneumatic circuit (2) configured to feed an air flow into a passenger compartment (3) of a vehicle; and a cooling circuit (4) to refrigerate the air flow fed along the pneumatic circuit (2); the pneumatic circuit (2) comprising at least one feeding branch (10) comprising, in turn, a first pneumatic duct (11), a second pneumatic duct (12) and a three-way joint (14) which comprises a valve body (15) with a cylindrical shape provided with an inlet (16) connected to the first pneumatic duct (11), with a first outlet (17) connected to the second pneumatic duct (12), and with a second outlet (18) configured to communicate with the passenger compartment (3) of the vehicle, and which further comprises a shutter (19) which is mounted within the valve body (15) so as to rotate around a longitudinal axis (20) of the valve body (15) from and to a closing position, wherein the inlet (16) is separate from the two outlets (17, 18), the shutter (19) comprises a rocker arm (21) provided with a first arm (22a) and with a second arm (22b), each delimited by a respective end edge (23), which is parallel to the longitudinal axis (20) of the valve body (15) and cooperates with an inner surface (24) of the valve body (15); the shutter (19) being movable to a plurality of first opening positions, in which the first arm (22a) prevents the refrigerated air flow fed through the inlet (16) from reaching the second outlet (18), the second arm (22b) directs the refrigerated air flow fed through the inlet (16) towards the first outlet (17) and the shutter (19) selectively controls the refrigerated air flow rate fed through the first outlet (17); and **characterized in that** the first arm (22a) and the second arm (22b) of the rocker arm (21) are arranged at an angle smaller than 180° relative to one another and **in that** the shutter (19) is movable to a plurality of second opening positions, in which the second arm (22b) prevents the refrigerated air flow fed through the inlet (16) from reaching the first outlet (17), the first arm (22a) directs the refrigerated air flow fed through the inlet (16) towards the second outlet (18) and the shutter (19) selectively controls the refrigerated air flow rate fed through the second outlet (18).

2. The car air conditioning system (1) according to claim 1, wherein the shutter (19) is movable to at least one third opening position, in which the inlet (16) is connected both to the first outlet (17) and to the second outlet (18).

3. The car air conditioning system (1) according to claim 2, wherein the shutter (19) is movable to a plurality of third opening positions, in which the inlet (16) is connected both to the first outlet (17) and to the second outlet (18), so as to selectively control the refrigerated air flow rate fed to the two outlets (17, 18).

4. The car air conditioning system (1) according to any one of the preceding claims, wherein the shutter (19) is movable to a fourth opening position, in which the inlet (16) is connected to the first outlet (17) and is separate from the second outlet (18).

5. The car air conditioning system (1) according to any one of the preceding claims, wherein the shutter (19) is movable to a fifth opening position, in which the inlet (16) is connected to the second outlet (18) and is separate from the first outlet (17).

6. The car air conditioning system (1) according to claim 5, wherein the three-way joint (14) further comprises a limit stop element (26) to stop the shutter (19) in the closing position and in the fifth opening position.

7. The car air conditioning system (1) according to any one of the preceding claims, wherein the inlet (16) has a longitudinal axis (16a) parallel to, in particular coinciding with, a longitudinal axis (17a) of the first outlet (17) and transverse, in particular perpendicular, to a longitudinal axis (18a) of the second outlet (18).

8. The car air conditioning system (1) according to any one of the preceding claims, wherein the pneumatic circuit (2) comprises a manifold (9) to feed the air flow to the cooling circuit (4) and two feeding branches (10) connected to the manifold (9) and mounted in parallel to one another to feed the refrigerated air flow to different areas of the passenger compartment (3).

9. A vehicle comprising a passenger compartment (3); and a car air conditioning system (1) according to any one of the claims from 1 to 8.

## Patentansprüche

1. Autoklimaanlage (1), umfassend einen pneumatischen Kreislauf (2), der so konfiguriert ist, dass er einen Luftstrom in einen Fahrgastraum (3) eines Fahrzeugs einspeist; und einen Kühlkreislauf (4), um den entlang des pneumatischen Kreislaufs (2) eingespeisten Luftstrom zu kühlen; wobei der pneumatische Kreislauf (2) mindestens einen Zuführzweig (10) umfasst, der seinerseits eine erste pneumatische Leitung (11), eine zweite pneumatische Leitung (12) und eine Dreiwege-Verbindungsstück (14) umfasst, die einen Ventilkörper (15) mit einer zylindrischen Form umfasst, der mit einem Einlass (16), der mit der ersten pneumatischen Leitung (11) verbunden ist, mit einem ersten Auslass (17), der mit der zweiten pneumatischen Leitung (12) verbunden ist, und mit einem zweiten Auslass (18) versehen ist, der so konfiguriert ist, dass er mit dem Fahrgastraum (3) des Fahrzeugs in Verbindung steht, und die ferner einen Verschluss (19) umfasst, der innerhalb des Ventilkörpers (15) so angebracht ist, dass er sich um eine Längsachse (20) des Ventilkörpers (15) von und zu einer Schließposition dreht, wobei der Einlass (16) von den beiden Auslässen (17, 18) getrennt ist, der Verschluss (19) einen Kipphebel (21) umfasst, der mit einem ersten Arm (22a) und mit einem zweiten Arm (22b) versehen ist, die jeweils durch eine Endkante (23) begrenzt sind, die parallel zur Längsachse (20) des Ventilkörpers (15) verläuft und mit einer Innenfläche (24) des Ventilkörpers (15) zusammenwirkt; wobei der Verschluss (19) in eine Vielzahl von ersten Öffnungspositionen bewegbar ist, in denen der erste Arm (22a) verhindert, dass der durch den Einlass (16) zugeführte Kühlluftstrom den zweiten Auslass (18) erreicht, der zweite Arm (22b) den durch den Einlass (16) zugeführten Kühlluftstrom in Richtung des ersten Auslasses (17) lenkt und der Verschluss (19) selektiv die durch den ersten Auslass (17) zugeführte Kühlluftstrommenge steuert; und **dadurch gekennzeichnet, dass** der erste Arm (22a) und der zweite Arm (22b) des Kipphebels (21) in einem Winkel kleiner als 180° relativ zueinander angeordnet sind und dass der Verschluss (19) in eine Vielzahl von zweiten Öffnungspositionen bewegbar ist, in denen der zweite Arm (22b) verhindert, dass der durch den Einlass (16) zugeführte Kühlluftstrom den ersten Auslass (17) erreicht, der erste Arm (22a) den durch den Einlass (16) zugeführten Kühlluftstrom in Richtung des zweiten Auslasses (18) lenkt und der Verschluss (19) selektiv die durch den zweiten Auslass (18) zugeführte Kühlluftstrommenge steuert.

2. Autoklimaanlage (1) nach Anspruch 1, wobei der Verschluss (19) in mindestens eine dritte Öffnungsposition bewegbar ist, in der der Einlass (16) sowohl mit dem ersten Auslass (17) als auch mit dem zweiten Auslass (18) verbunden ist.

3. Autoklimaanlage (1) nach Anspruch 2, wobei der Verschluss (19) in eine Vielzahl von dritten Öffnungspositionen bewegbar ist, in denen der Einlass (16) sowohl mit dem ersten Auslass (17) als auch mit dem zweiten Auslass (18) verbunden ist, um so die den beiden Auslässen (17, 18) zugeführte Kühlluftmenge selektiv zu steuern.

4. Autoklimaanlage (1) nach einem der vorstehenden Ansprüche, wobei der Verschluss (19) in eine vierte Öffnungsposition bewegbar ist, in der der Einlass (16) mit dem ersten Auslass (17) verbunden und vom zweiten Auslass (18) getrennt ist.

5. Autoklimaanlage (1) nach einem der vorstehenden Ansprüche, wobei der Verschluss (19) in eine fünfte Öffnungsposition bewegbar ist, in der der Einlass (16) mit dem zweiten Auslass (18) verbunden und vom ersten Auslass (17) getrennt ist.

6. Autoklimaanlage (1) nach Anspruch 5, wobei das Dreiwege-Verbindungsstück (14) ferner ein Anschlagelement (26) zum Anhalten des Verschlusses (19) in der Schließposition und in der fünften Öffnungsposition umfasst.

7. Autoklimaanlage (1) nach einem der vorstehenden Ansprüche, wobei der Einlass (16) eine Längsachse (16a) aufweist, die parallel zu einer Längsachse (17a) des ersten Auslasses (17) verläuft, insbesondere mit dieser zusammenfällt, und quer, insbesondere senkrecht, zu einer Längsachse (18a) des zweiten Auslasses (18) verläuft.

8. Autoklimaanlage (1) nach einem der vorstehenden Ansprüche, wobei der pneumatische Kreislauf (2) einen Verteiler (9) zum Zuführen des Luftstroms zum Kühlkreislauf (4) und zwei mit dem Verteiler (9) verbundene und parallel zueinander angeordnete Zuführzweige (10) zum Zuführen des gekühlten Luftstroms zu verschiedenen Bereichen des Fahrgastraums (3) umfasst.

9. Fahrzeug, umfassend einen Fahrgastraum (3); und eine Autoklimaanlage (1) nach einem der Ansprüche 1 bis 8.

## Revendications

1. Système de climatisation de voiture (1) comprenant un circuit pneumatique (2) configuré pour apporter un écoulement d'air dans un habitacle (3) d'un véhicule ; et un circuit de refroidissement (4) pour réfrigérer l'écoulement d'air apporté le long du circuit pneumatique (2) ; le circuit pneumatique (2) comprenant au moins une branche d'apport (10) comprenant, à son tour, un premier conduit pneumatique (11), un deuxième conduit pneumatique (12) et un raccord à trois voies (14) qui comprend un corps de vanne (15) doté d'une forme cylindrique munie d'une entrée (16) raccordée au premier conduit pneumatique (11), d'une première sortie (17) raccordée au deuxième conduit pneumatique (12), et d'une deuxième sortie (18) configurée pour communiquer avec l'habitacle (3) du véhicule, et qui comprend en outre un obturateur (19) qui est monté au sein du corps de vanne (15) de façon à être en rotation autour d'un axe longitudinal (20) du corps de vanne (15) depuis et vers une position de fermeture, dans lequel l'entrée (16) est distincte des deux sorties (17, 18), l'obturateur (19) comprend un bras oscillant (21) muni d'un premier bras (22a) et d'un deuxième bras (22b), chacun délimités par un bord d'extrémité (23) respectif, qui est parallèle à l'axe longitudinal (20) du corps de vanne (15) et coopère avec une surface interne (24) du corps de vanne (15) ; l'obturateur (19) étant mobile vers une pluralité de premières positions d'ouverture, dans lesquelles le premier bras (22a) empêche l'écoulement d'air réfrigéré apporté par l'entrée (16) d'atteindre la deuxième sortie (18), le deuxième bras (22b) dirige l'écoulement d'air réfrigéré apporté par l'entrée (16) vers la première sortie (17) et l'obturateur (19) régule sélectivement le débit d'écoulement d'air réfrigéré apporté par la première sortie (17) ; et **caractérisé en ce que** le premier bras (22a) et le deuxième bras (22b) du bras oscillant (21) sont agencés selon un angle inférieur à 180° l'un par rapport à l'autre et **en ce que** l'obturateur (19) est mobile vers une pluralité de deuxièmes positions d'ouverture, dans lesquelles le deuxième bras (22b) empêche l'écoulement d'air réfrigéré apporté par l'entrée (16) d'atteindre la première sortie (17), le premier bras (22a) dirige l'écoulement d'air réfrigéré apporté par l'entrée (16) vers la deuxième sortie (18) et l'obturateur (19) régule sélectivement le débit d'écoulement d'air réfrigéré apporté par la deuxième sortie (18).

2. Système de climatisation de voiture (1) selon la revendication 1, dans lequel l'obturateur (19) est mobile vers au moins une troisième position d'ouverture, dans laquelle l'entrée (16) est raccordée à la fois à la première sortie (17) et à la deuxième sortie (18).

3. Système de climatisation de voiture (1) selon la revendication 2, dans lequel l'obturateur (19) est mobile vers une pluralité de troisièmes positions d'ouverture, dans lesquelles l'entrée (16) est raccordée à la fois à la première sortie (17) et à la deuxième sortie (18), de façon à réguler sélectivement le débit d'écoulement d'air réfrigéré apporté aux deux sorties (17, 18).

4. Système de climatisation de voiture (1) selon l'une quelconque des revendications précédentes, dans lequel l'obturateur (19) est mobile vers une quatrième position d'ouverture, dans laquelle l'entrée (16) est raccordée à la première sortie (17) et est distincte de la deuxième sortie (18).

5. Système de climatisation de voiture (1) selon l'une quelconque des revendications précédentes, dans lequel l'obturateur (19) est mobile vers une cinquième position d'ouverture, dans laquelle l'entrée (16) est raccordée à la deuxième sortie (18) et est distincte de la première sortie (17) .

6. Système de climatisation de voiture (1) selon la revendication 5, dans lequel le raccord à trois voies (14) comprend en outre un élément de butée (26) pour arrêter l'obturateur (19) dans la position de fermeture et dans la cinquième position d'ouverture.

7. Système de climatisation de voiture (1) selon l'une quelconque des revendications précédentes, dans lequel l'entrée (16) possède un axe longitudinal (16a) parallèle à, en particulier coïncidant avec, un axe longitudinal (17a) de la première sortie (17) et transversal, en particulier perpendiculaire, à un axe longitudinal (18a) de la deuxième sortie (18).

8. Système de climatisation de voiture (1) selon l'une quelconque des revendications précédentes, dans lequel le circuit pneumatique (2) comprend un collecteur (9) pour apporter l'écoulement d'air au circuit de refroidissement (4) et deux branches d'apport (10) raccordées au collecteur (9) et montées en parallèle l'une à l'autre pour apporter l'écoulement d'air réfrigéré à différentes zones de l'habitacle (3).

9. Véhicule comprenant un habitacle (3) ; et un système de climatisation de voiture (1) selon l'une quelconque des revendications 1 à 8.
